(19) Europäisches Patentamt
European Patent Office
Office européen des brevets

(11) EP 0 701 561 B1

(12) EUROPEAN PATENT SPECIFICATION

(45) Date of publication and mention of the grant of the patent: **19.08.1998 Bulletin 1998/34**

(21) Application number: **94918338.8**

(22) Date of filing: **18.05.1994**

(51) Int Cl.[6]: **C07F 9/09**, A61K 31/66, C07F 9/40

(86) International application number: **PCT/EP94/01608**

(87) International publication number: **WO 94/28004 (08.12.1994 Gazette 1994/27)**

# (54) DESOXYAZAPHOSPHOLIPID DERIVATIVES HAVING INHIBITING ACTIVITY ON PHOSPHOLIPASE A2

DESOXYAZAPHOSPHOLIPID-DERIVATE MIT INHIBIERENDER AKTIVITÄT AUF PHOSPHOLIPASE

DERIVES DE DESOXYAZAPHOSPHOLIPIDES A ACTIVITE D'INHIBITION DE LA PHOSPHOLIPASE A2

(84) Designated Contracting States: **AT BE CH DE DK ES FR GB GR IE IT LI LU MC NL PT SE**

(30) Priority: **31.05.1993 ES 9301180**

(43) Date of publication of application: **20.03.1996 Bulletin 1996/12**

(73) Proprietor: **LABORATORIOS MENARINI S.A. 08912 Badalona (ES)**

(72) Inventors:
- **CARGANICO, Germano E-08320 El Masnou (ES)**
- **MAULEON CASELLAS, David E-08191 Rubi (ES)**
- **GARCIA PEREZ, M. Luisa E-08320 El Masnou (ES)**

(74) Representative: **Minoja, Fabrizio Bianchetti Bracco Minoja S.r.l. Via Rossini, 8 20122 Milano (IT)**

(56) References cited:
**EP-A- 0 208 961** **WO-A-94/09014**
**US-A- 5 144 045**

- **BIOCHIM. BIOPHYS. ACTA (BBACAQ,00063002);90; VOL.1046 (3); PP.249-57, CBLE;LAB. BIOCHEM.; UTRECHT; 3584 CH; NETH. (NL) De Haas G H et al 'Competitive inhibition of lipolytic enzymes. IV. Structural details of acylamino phospholipid analogs important for the potent inhibitory effects on pancreatic phospholipase A2' cited in the application**
- **BIOCHIM. BIOPHYS. ACTA (BBACAQ,00063002);92; VOL.1125 (1); PP.73-81, UNILEVER RES.;VLAARDINGEN; NETH. (NL) Deveer A M T J et al 'Competitive inhibition of lipolytic enzymes. VII. The interaction of pancreatic phospholipase A2 with micellar lipid/water interfaces of competitive inhibitors' cited in the application**
- **J. MED. CHEM. (JMCMAR,00222623);94; VOL.37 (3); PP.337-41, EUROPEAN MOLECULAR BIOLOGY LABORATORY;HEIDELBERG; 69012; GERMANY (DE) Pisabarro M T et al 'Rational modification of human synovial fluid phospholipase A2 inhibitors'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 701 561 B1

Printed by Jouve, 75001 PARIS (FR)

## Description

The present invention relates to a series of novel desoxyazaphospholipid derivatives which exhibit inhibiting activity on phospholipase $A_2$, the pharmaceutically acceptable salts thereof, a process for the preparation thereof, pharmaceutical compositions containing said compounds, and the use thereof in therapy.

TECHNOLOGICAL BACKGROUND

It is well established that most eicosanoides, prostaglandins and related compounds derive from a fatty acid having 20 carbons and 4 insaturations, namely arachidonic acid (AA), which is mainly found when esterifying the hydroxy group at the 2-position of glycerol of the phospholipids contained in the cell membranes. AA is released from the phospholipid which contains it by the action of a lipase, i.e. phospholipase $A_2$ ($PLA_2$) ("CRC Handbook of Eicosanoids and Related Lipids", vol. II, Ed. A.L.Willis, CRS Press, Inc. Florida (1989)).

Once AA is released, it is metabolized in mammals mainly by two different pathways or enzyme systems. Through cyclo-oxygenase it produces prostaglandins and thromboxanes, the most significant being $PGE_2$ and $TxA_2$, which participate directly in inflammation (Higgs et al. Annals of Clinical Research, 16, 287-299 (1984)). Through lipoxygenases it produces leukotrienes, the most important being $LTB_4$, $LTC_4$ and $LTD_4$, which also participate in inflammatory reactions, show chemotactic activities, stimulate the secretion of lysosomial enzymes and act as important factors in immediate hypersensitivity reactions (Bailey and Casey, Ann. Rep. Med. Chem., 17, 203-217 (1982)).

By the action of $PLA_2$, besides the release of fatty acids, the corresponding lysophospholipids are obtained, which can be reesterified or, if they have phosphocholine at the 3-position, an ether bond at the 1-position and are in a cellular system with acetyl-transferase activity, can be acetylated at the 2-position, becoming PAF (platelet activating factor). PAF is also a proinflammatory agent, which is supposed to play an important role in various pathological processes, such as asthma, anaphylaxis, inflammation and ischemia (Braquet et al., Pharmacol. Rev., 39 (2), 97 (1987)).

Besides its relation with inflammatory processes, $PLA_2$ can have other direct consequences on some pathological processes of thrombotic degenerative and cancerous type.

From what said above it is evident that $PLA_2$ plays an important role in the control of the production of the mediators involved in the above mentioned pathologies. As a consequence, $PLA_2$-inhibiting compounds are a new rational approach to the prevention, elimination or improvement of differemt allergic, anaphylactic, asthmatic, inflammatory and thrombotic conditions.

Even though various compounds have been described as "in vitro" inhibitors of $PLA_2$ (Wilkerson, Drugs of the Future, 15, 141 (1990)), at present there are no specific inhibitors of $PLA_2$ of clinical use.

Some compounds described in literature as inhibitors of $PLA_2$ are related structurally with the compounds of the present invention, but they are not included in the general formula **(I)** (De Haas G. H. et al. , Biochim. Biophys. Acta, 1046, 249 (1990)). Also, references were found on compounds similar to the ones of the present invention, not included in formula **(I)**, with a sulfonamido group at the 2-position, which exert a very weak inhibiting action on $PLA_2$ (Deveer A.M.Th.J et al. , Biochim. Biophys. Acta, 1125, 73 (1992).

EP-A-0208961 (21.07.87) discloses phospholipid analogs useful as PAF synthesis inhibitors, characterized by a polar head containing a nitrogen atom, e.g. a choline group.

Surprisingly, the derivatives with a sulfonamido group at the 2-position included in formula **(I)**, particularly when they have as a polar head a substituent with a terminal phenylmethyl group, turned out to be very strong inhibitors of $PLA_2$.

So far the only drugs in which a $PLA_2$ inhibition mechanism was supposed, even if in an indirect way, are corticosteroids. However, these compounds exhibit a number of negative systemic side-effects limiting their use, particularly in chronic pathologies. Selective inhibitors of $PLA_2$, such as the compounds of the present invention, have the advantage of exhibiting the same effectiveness as corticosteroids, but without the side effects thereof.

## DISCLOSURE

The present invention relates to a series of novel desoxyazaphospholipid derivatives, the salts thereof, a process for the preparation thereof and pharmaceutical compositions containing them.

The compounds of the invention have general formula **(I)**,

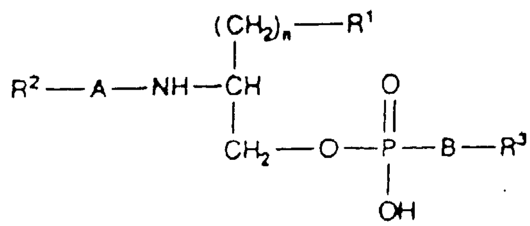

I

wherein

$R^1$ is hydrogen or phenyl;
n is an integer from 2 to 18 included;
A is a -CO- or $-SO_2-$ group;
$R^2$ is a $C_1$-$C_{20}$ straight or branched alkyl group or a phenylalkyl of less than 20 carbon atoms;
B is an oxygen atom or a methylene group;
$R^3$ is hydrogen, a $C_1$-$C_6$ straight or branched alkyl, a phenylalkyl group of less than 12 carbon atoms, a $-(CH_2)_mOR^4$ group, wherein m is a integer from 2 to 6 and $R^4$ is a $C_1$-$C_4$ straight or branched alkyl group, or a phenylalkyl group of less than 10 carbon atoms,

with the provisos that the -B-$R^3$ group cannot be $-OCH_2CH_2OH$ when A is -CO- and $R^1$ is H, nor when A is $-SO_2-$, $R^1$ is hydrogen and n is lower than 5, and when B is an oxygen atom, A is a -CO- group, $R_1$ is H, n is 10 - 18, $R_3$ is not hydrogen, methyl, ethyl.

The compounds of general formula **(I)** can be prepared in form of salts represented by formula **(Ia)**,

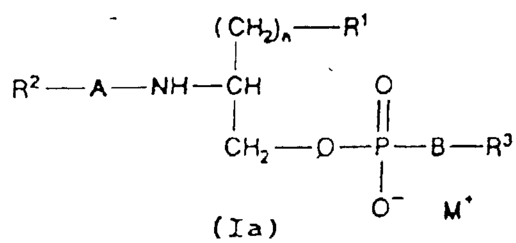

(Ia)

wherein $M^+$ is an alkali metal cation (such as $Na^+$, $K^+$), or the half amount of an alkaline-earth metal cation (such as 1/2 $Ca^{2+}$, 1/2 $Mg^{2+}$).

When $R^3$ contains an amino group, compounds of formula **(I)** can also be obtained in form of salts, as represented by formula **(Ib)**

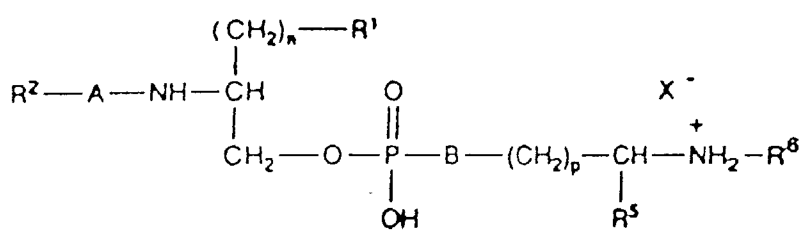

Ib

wherein $X^-$ is a pharmaceutically acceptable anion, such as chloride, bromide, iodide, acetate, trifluoroacetate or lactate and the other symbols are as defined above.

The compounds of general formula (I) contain one or more asymmetric carbons. The present invention includes all the possible stereoisomers as well as the mixtures thereof.

In the compounds of general formula **(I)**, $R^2$ can be for example methyl, ethyl, butyl, sec-butyl, isobutyl, pentyl, hexyl, decyl, undecyl, dodecyl, tetradecyl, pentadecyl, hexadecyl, heptadecyl, octadecyl, nonadecyl, icosyl, phenylmethyl, 3-phenylpropyl, 6-phenylhexyl, 8-phenyloctyl, 9-phenylnonyl, 11-phenylundecyl or 12-phenyldodecyl; when $R^3$

is an alkyl or phenylalkyl group, this can be for example methyl, ethyl, propyl, butyl, sec-butyl, isobutyl, pentyl, hexyl, phenylmethyl, 2-phenylethyl, 3-phenylpropyl, 4-phenylbutyl or 5-phenylpentyl; when $R^3$ is a $-(CH_2)_mOR^4$ group and $R^4$ is an alkyl or phenylalkyl group, this can be for example methyl, ethyl, propyl, isopropyl, butyl, sec-butyl, phenylmethyl, 2-phenylethyl or 3-phenylpropyl.

Preferred compounds of the invention are those in which:

- $R^1$, A, B and n have the above mentioned meanings;
- $R^2$ is an alkyl group, preferably hexyl, octyl, decyl, undecyl, dodecyl, pentadecyl or hexadecyl; or a phenylalkyl group, preferably 3-phenylpropyl, 4-phenylbutyl, 6-phenylhexyl or 8-phenyloctyl;
- $R^3$ is hydrogen, methyl, ethyl, propyl, butyl, phenylmethyl, 2-phenylethyl, 3-phenylpropyl, 2-benzyloxyethyl.

Particularly preferred compounds of the invention are the following ones:

(R)-2-Decanesulfonylaminohexanol-1-phospho-2-benzyloxyethanol.
(S)-2-Decanesulfonylaminohexanol-1-phospho-2-benzy loxyethanol.
2-Decanesulfonylaminooctanol-1-phospho-2-benzyloxyethanol.
(R)-2-Decanesulfonylaminooctanol-1-phospho-2-benzyloxyethanol.
(S)-2-Decanesulfonylaminooctanol-1-phospho-2-benzyloxyethanol.
2-Decanesulfonylaminodecanol-1-phospho-2-benzyloxyethanol.
2-Decanesulfonylaminotetradecanol-1-phospho-2-benzyloxyethanol.
2-Decanesulfonylaminooctadecanol-1-phospho-2-benzyloxyethanol.
2-Dodecanoylaminooctanol-1-phospho-2-benzyloxyethanol.
2-(3-Phenylpropanesulfonylamino)octanol-1-phospho-2-benzyloxyethanol.
2-Decanesulfonylamino-4-phenylbutanol-1-phospho-2-benzyloxyethanol.
2-Decanesulfonylamino-8-phenyloctanol-1-phospho-2-benzyloxyethanol.
2-Dodecanoylamino-8-phenyloctanol-1-phospho-2-benzyloxyethanol.
2-Decanesulfonylamino-14-phenyltetradecanol-1-phospho-2-benzyloxyethanol.
2-Hexanesulfonylaminooctanol-1-phospho-2-benzyloxyethanol.
2-Hexanoylaminooctanol-1-phospho-2-benzyloxyethanol.
2-Dodecanesulfonylaminooctanol-1-phospho-2-benzyloxyethanol.
2-Hexadecanesulfonylaminooctanol-1-phospho-2-benzyloxyethanol.
2-(6-Phenylhexanesulfonylamino)octanol-1-phospho-2-benzyloxyethanol.
2-(6-Phenylhexanoylamino)octanol-1-phospho-2-benzyloxyethanol.
2-Decanesulfonylaminooctanol-1-phosphoethanol.
2-Dodecanoylaminooctanol-1-phosphoethanol.
2-Dodecanoylaminooctanol-1-phosphate.
2-Decanesulfonaminooctyl butylphosphonate.
2-Decanesulfonaminooctyl (4-phenylbutyl)phosphonate.
2-Dodecanoylaminooctyl butylphosphonate.
2-Dodecanoylaminooctyl (3-hydroxypropyl)phosphonate.
2-Dodecanoylaminooctyl (3-benzyloxypropyl)phosphonate.

According to the present invention, the compounds of general formula (I) are obtained starting from a compound of formula **(II)** of suitable stereochemistry at the 2-carbon,

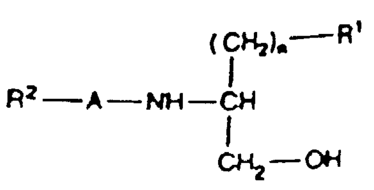

II

wherein $R^1$, n, A and $R^2$ have the above mentioned meanings, which is reacted with different reactive, depending on the meanings of B in formula (I).

a) When in **(I)** B is oxygen, compound **(II)** is reacted with a reactive $PX_3$, wherein X is a halogen, preferably chlorine, in the presence of a proton-binding base, such as triethylamine, and a mildly nucleophilic base, such as imidazole, in suitable organic solvents, such as acetonitrile, toluene or tetrahydrofuran, at a temperature from 0° to 40°C, for a time from 3 to 18 hours, to obtain a compound of formula **(III)**,

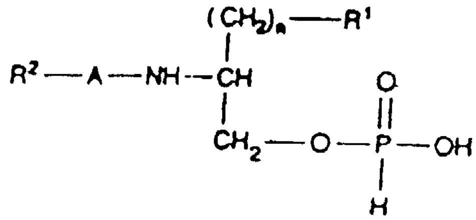

III

subsequently this intermediate is reacted with a compound **(IV)**,

$HO\text{-}R^7$ **(IV)**

wherein $R^7$ can be equivalent to the group $R^3$ in formula (I) except for hydrogen, in an organic solvent, preferably pyridine at a temperature from 0° to 25°C for a time from 1 to 6 hours, thereby obtaining an intermediate of formula **(V)**,

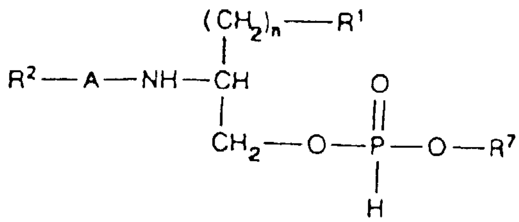

V

which is oxidized, preferably with iodine, in a suitable solvent, such as humid pyridine, at a temperature from 0° to 25°C for a time from 1 to 5 hours, to give an intermediate **(VI)**,

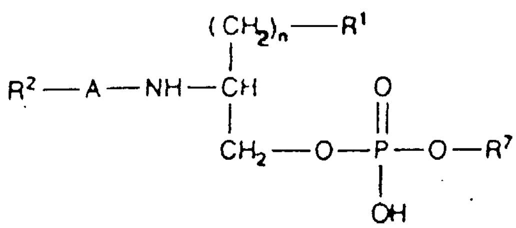

VI

wherein $R^1$, n, A, $R^2$ and $R^7$ are the groups described above. This compound **(VI)** coincides to **(I)**, or it is converted into **(I)** by removing any protecting groups present in $R^7$, according to methods conventional in chemistry; when in $R^7$ benzyl protecting groups are present, in form of the benzyl ether for the protection of hydroxy groups, benzyl ether for the protection of carboxy groups or benzyl carbamate for the protection of amino groups, these can be removed by catalytic hydrogenation with Pd-C or with $Pd(OH)_2$, in solvents such as methanol, water or acetic acid, under hydrogen pressures from atmosphere pressure to 50 psi, at a temperature from 20° to 50°C for a time from 3 to 20 hours; or, when in $R^7$ protecting groups are present such as triphenylmethyl to protect hydroxy groups, tert-butyl to protect carboxy groups or tert-butyloxycarbonyl to protect amino groups, these can be removed in

acidic medium, for example with hydrobromic, hydrochloric or trifluoroacetic acids, in a suitable solvent such as dioxane, tetrahydrofuran or chloroform, at a temperature from 0° to 40°C for a time from 15 minutes to 6 hours.

When in **(I)** $R^3$ is hydrogen, this compound can be obtained by direct oxidation of an intermediate **(III)** analogously to what indicated for the oxidation of a compound **(V)**.

b) When in **(I)** B is a methylene group, compound **(II)** is reacted with a reactive **(VII)**,

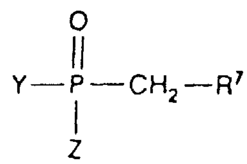

VII

wherein Y is halogen, preferably chlorine, Z is halogen, preferably chlorine, or a methoxide group, in the presence of an amine such as triethylamine or N,N-dimethylaminopyridine, in a suitable organic solvent, such as chloroform or methylene chloride at a temperature from 0° to 40°C for a time from 3 to 24 hours, to obtain an intermediate of formula **(VIII)**,

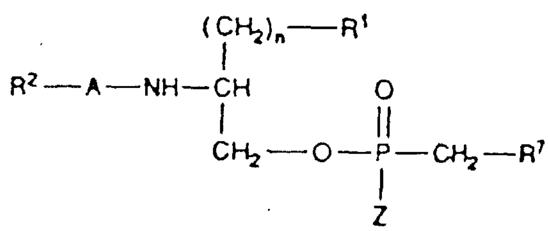

VIII

wherein $R^1$, n, A, $R^2$, Z and $R^7$ have the above mentioned meanings. After that, by acid hydrolysis in an aqueous medium, preferably using diluted hydrochloric acid, when Z is halogen, or by treatment with a suitable nucleophilic agent such as trimethylamine or sodium iodide, when Z is a methoxy group, compound **(IX)** is obtained,

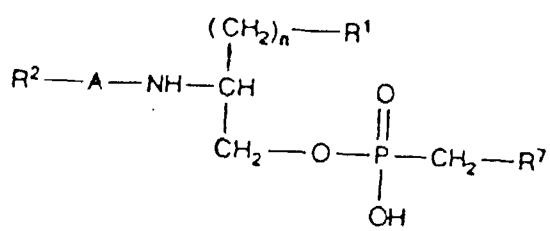

IX

wherein $R^1$, n, A, $R^2$ and $R^7$ have the above mentioned meanings. This compound **(IX)** coincides to **(I)**, or it can be converted into **(I)** by removing any protecting groups present in $R^7$, according to the methods mentioned above.

Finally, if a specific salt of **(I)** is desired, the compound is treated with the acid, the base or the suitable ion exchanger, according to conventional methods.

A starting compound **(II)** can be obtained, for example, following the synthetic sequence shown in Scheme 1.

Scheme 1

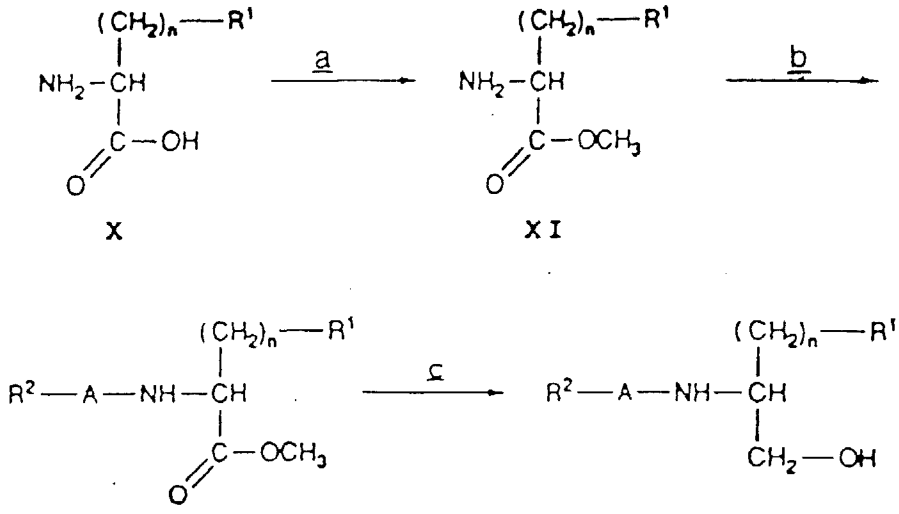


X XI XII II

In the above sequence, which is used when the starting products of formula **(X)** are commercially available, a compound of formula **(XI)** can be obtained (step a), for example, reacting the compound **(X)** with thionyl or oxalyl chloride in methanol, at a temperature from -30° to 20°C, for a time from 12 to 48 hours.

A compound of formula **(XII)** can be obtained (step b) reacting the compound **(XI)** with a compound $R^2$-A-Y, wherein $R^2$ and A have the above mentioned meanings and Y can be iodide, chloride or bromide, in the presence of a base such as triethylamine, pyridine or N,N-dimethylaminopyridine, in a suitable solvent such as chloroform or methylene chloride, at a temperature from 0° to 40°C, for a time from 1 to 24 hours.

A compound of formula **(II)** can be obtained (step c) reacting a compound **(XII)** with a suitable metal hydride such as sodium borohydride, in an organic solvent such as methanol, ethanol or tetrahydrofuran in the presence of a catalytic amount of water, at a temperature from 20° to solvent reflux for a time from 3 to 24 hours.

Alternatively, when the starting compound **(X)** is not commercially available, a compound **(II)** can be obtained, for example, by the synthetic sequence shown in Scheme 2.

Scheme 2

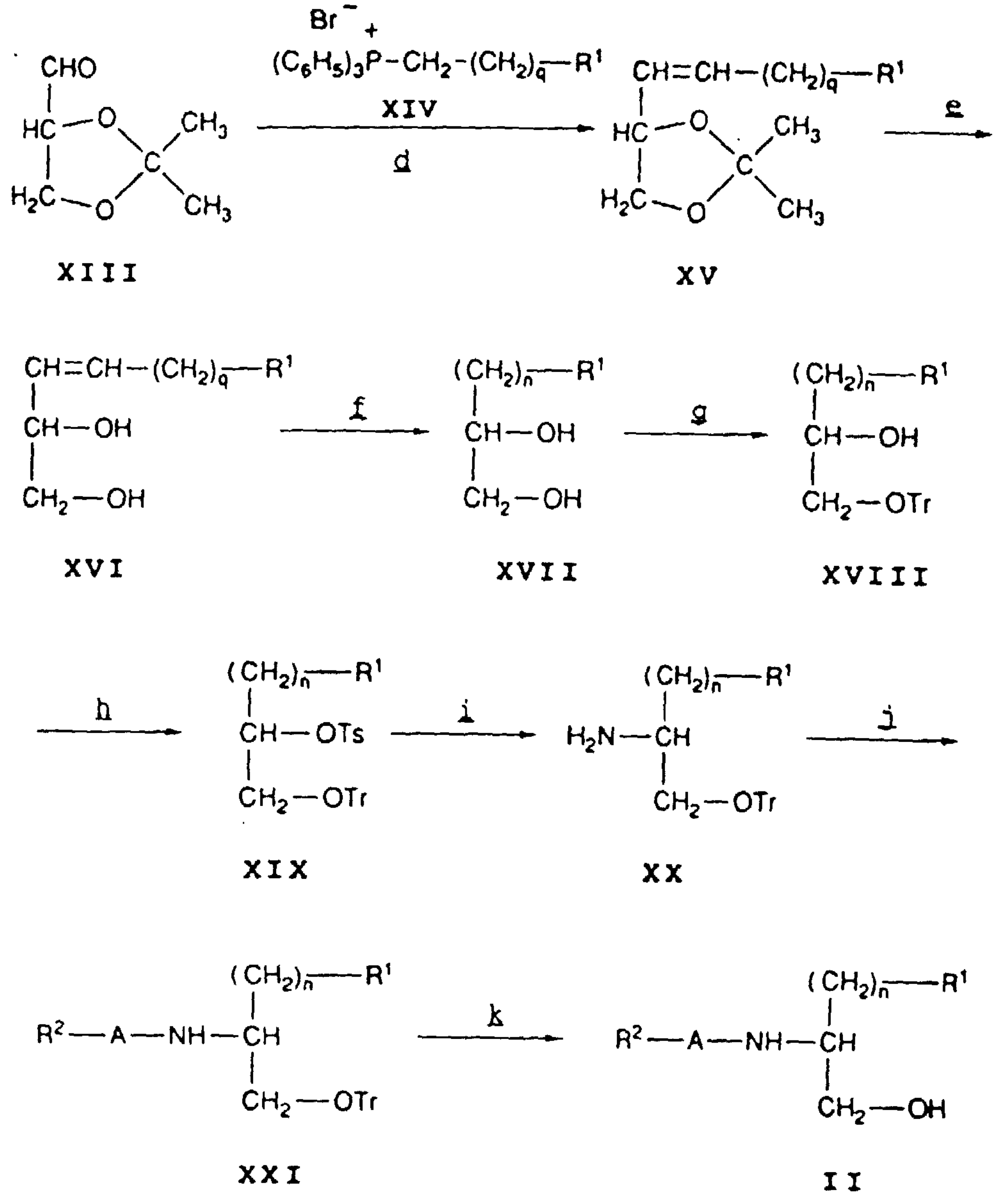


XIII, XV, XVI, XVII, XVIII, XIX, XX, XXI, II

In this synthetic sequence the starting compounds are compound **(XIII)**, which is commercially available as both the R and S enantiomer, and a compound **(XIV)**, wherein $R^1$ has the above mentioned meanings and q is an integer from 0 to 16, said compound can be obtained starting from the corresponding bromide, $BrCH_2(CH_2)_qR^1$, which if $R^1$ is hydrogen is commercially available and if $R^1$ is phenyl can be prepared by the procedure disclosed in ES-2034884. Said bromide is treated with triphenylphosphine in a suitable solvent such as acetonitrile or tetrahydrofuran at a temperature from 25°C to solvent reflux, for a time from 12 to 96 hours.

In step d, a compound **(XIV)** is subjected first to the action of a strong base such as n-butyl lithium or sodium amide, thereafter it is reacted with a compound **(XIII)** in a suitable solvent such as benzene, dimethylformamide or tetrahydrofuran, at a temperature from 0° to 25°C for a time from 3 to 24 hours, thus obtaining a compound **(XV)**, wherein q and $R^1$ have the above mentioned meanings.

A compound **(XVI)** can be obtained starting from a compound of formula **(XV)** (step e) by acid hydrolysis with hydrochloric or sulfuric acids, in a suitable solvent such as tetrahydrofuran or dioxane, at a temperature from 25°C to solvent reflux, for a time from 1 to 4 hours.

A compound **(XVII)** can be prepared for example starting from a compound **(XVI)**, by catalytic hydrogenation with a suitable catalyst, such as Pd-C or $Pd(OH)_2$-C in a solvent such as ethanol or methanol, under hydrogen pressures from atmospheric pressure to 25 psi, at a temperature from 25° to 50°C, for a time from 3 to 24 hours (step f).

A compound **(XVIII)** can be obtained for example by step g, starting from a compound **(XVII)**, which is reacted with trityl chloride in a solvent acting as the base, such as pyridine or triethylamine, at a temperature from 25° to 100°C, for a time from 8 to 48 hours.

A compound **(XIX)** can be obtained for example by treatment of a compound **(XVIII)** (step h) with p-toluenesulfonic acid chloride in the presence of a base such as pyridine or triethylamine which can in their turn act as the solvents, the presence of other solvents such as chloroform or methylene chloride being optional, at a temperature from 0° to 40°C for a time from 3 to 18 hours.

A compound of formula **(XX)** can be prepared for example starting from a compound **(XIX)** (step i) by substituting the tosylated group with an azido group, using sodium azide as the reactive, in a suitable organic solvent such as dimethylformamide or tetrahydrofuran at a temperature from 20°C to solvent reflux for a time from 6 to 24 hours; and subsequent catalytic hydrogenation of the intermediate azide with a suitable catalyst such as Pd-C or in a solvent such as ethanol, methanol or ethyl acetate, under hydrogen pressures from atmospheric pressure to 25 psi, at a temperature from 0° to 50°C, for a time from 6 to 24 hours.

A compound **(XXI)** can be prepared for example starting from a compound **(XX)** (step j) by treatment with a reactive $R^2$-A-Y, as described above for the preparation of a compound **(XII)**.

Finally, a compound **(II)** can be obtained by detritylation of a compound **(XXI)** (step k) which can be carried out in acidic medium, using acids such as p-toluenesulfonic, hydrochloric or acetic acids, in a suitable solvent such as dioxane, ethanol or THF, at a temperature from 25° to 80°C, for a time from 2 to 12 hours.

The compounds of the present invention show a marked activity as inhibitors of $PLA_2$ activity, thus exerting anti-inflammatory and antiallergic actions which make them valuable in the treatment of those diseases in which this enzyme is involved. Therefore, said compounds can be used in human therapy, for the prevention and treatment of allergic rhinitis, bronchial asthma, hypersensitivity reactions such as allergic conjunctivitis, various inflammatory conditions, such as those present in rheumatic arthritis, osteoarthritis, tendinitis, bursitis, psoriasis and other related inflammations.

For the therapeutical use, the compounds of the present invention, are formulated in suitable pharmaceutical formulations, according to conventional techniques and excipients, such as those described in Remington's Pharmaceutical Science Handbook, Mack Pub. Co., N.Y., USA. Examples of said formulations include capsules, tablets, syrups and the like, containing 1 to 1000 mg per unitary dose.

EXAMPLES

The following examples illustrate the preparation and the pharmacological activity of the compounds of the present invention.

EXAMPLE 1

Methyl 2-aminooctanoate (**XI**, $R^1$=H, n=6).

A solution of thionyl chloride (3.24 ml, 44.6 mmol) in methanol (20 ml), at -10°C is added with 2 g (12.5 mmol) of 2-aminooctanoic acid. The mixture is stirred at room temperature for 24 h, then it is evaporated to dryness, to obtain 2.6 g of the title compound as a white solid melting at 94-95°C (93% yield).
N.M.R. $^1H$ (300 MHz, $CDCl_3$) $\delta$ ppm: 0.82 (t, 3H); 1.30 (m, 8H); 1.98 (m, 2H); 3.78 (s, 3H); 4.05 (m, 1H).

EXAMPLE 2

Methyl (R)-2-aminohexanoate (**XI**, $R^1$=H, n=4).

Following the process described in Example 1, starting from (R)-2-aminohexanoic acid (D-norleucine) the title compound is prepared as a white solid melting at 140-141°C (98 % yield).
$[\alpha]_D^{20}$ =-20.3° (c=1.04, chloroform)
N.M.R. $^1H$ (300 MHz, $CDCl_3$) $\delta$ ppm: 0.89 (t, 3H); 1.40 (m, 4H); 2.00 (m, 2H); 3.79 (s, 3H); 4.10 (m, 1H).

EXAMPLE 3

Methyl (S)-2-aminohexanoate (**XI**, $R^1$=H, n=4).

Following the process described in Example 1, starting from (S)-2-aminohexanoic acid (L-norleucine), the title compound is prepared as a white solid melting at 140-141°C (95 % yield).
$[\alpha]_D^{20}$ =+20.2° (c=1.18, chloroform)

N.M.R. $^1H$ (300 MHz, $CDCl_3$) δ ppm:0.89 (t, 3H); 1.40 (m, 4H); 2.00 (m, 2H); 3.79 (s, 3H); 4.10 (m, 1H).

EXAMPLE 4

Methyl 2-amino-4-phenylbutanoate (**XI**, $R^1$=$C_6H_5$, n=2).

Following the process described in Example 1, starting from 2-amino-4-phenylbutanoic acid (D,L-homophenylalanine), the title compound is prepared as a white solid melting at 110-112°C (95 % yield).
N.M.R. $^1H$ (300 MHz, $CDCl_3$) δ ppm: 2.25 (m, 2H); 2.78 (m, 2H); 3.80 (s, 3H); 4.80 (m, IH); 7.20 (m, 5H).

EXAMPLE 5

Methyl 2-decanesulfonylaminooctanoate (**XII**, $R^1$=H, n=6, A=$SO_2$, $R^2$=$(CH_2)_9CH_3$).

A solution of methyl 2-aminooctanoate (9.3 g, 53.9 mmol) in dry chloroform (200 ml) at 0°C is added with triethylamine (23 ml, 162 mmol) and decanesulfonyl chloride (18.1 g, 75.4 mmol). The mixture is stirred at room temperature for 18 h. After that the mixture is diluted with chloroform (200 ml), washed with water, dried and the solvent is removed, to obtain a crude compound which is purified by flash chromatography on a silica gel column. Eluting with 5:1 hexane: ethyl acetate, 15 g of the title compound are obtained (71% yield).
N.M.R. $^1H$ (300 MHz, $CDCl_3$) δ ppm: 0.89 (t, 6H); 1.27 (m, 22H); 1.75 (m, 4H); 2.95 (t, 2H); 3.78 (s, 3H); 4.08 (m, 1H).

EXAMPLE 6

Methyl (R)-2-decanesulfonylaminohexanoate (**XII**, $R^1$=H, n=4, A=$SO_2$, $R^2$=$(CH_2)_9CH_3$).

Following the process described in Example 5, starting from methyl (R)-2-aminohexanoate, the title compound is prepared as a white solid melting at 38-39°C (77 % yield).
$[\alpha]_D^{20}$ =-2.4° (c=1.07, chloroform)
N.M.R. $^1H$ (300 MHz, $CDCl_3$) δ ppm: 0.89 (t, 6H); 1.30 (m, 18H); 1.75 (m, 4H); 2.95 (t, 2H); 3.74 (s, 3H); 4.05 (m, 1H).

EXAMPLE 7

Methyl (S)-2-decanesulfonylaminohexanoate (**XII,** $R^1$=H, n=4, A=$SO_2$, $R^2$=$(CH_2)_9CH_3$).

Following the process described in Example 5, starting from methyl (S)-2-aminohexanoate, the title compound is prepared as a white solid melting at 38-39°C (90 % yield).
$[\alpha]_D^{20}$ =+1.8° (c=1.02, chloroform)
N.M.R. $^1H$ (300 MHz, $CDCl_3$) δ ppm: 0.89 (t, 6H); 1.30 (m, 18H); 1.75 (m, 4H); 2.95 (t, 2H); 3.74 (s, 3H); 4.05 (m, 1H).

EXAMPLE 8

Methyl 2-dodecanoylaminooctanoate (**XII**, $R^1$=H, n=6, A=CO, $R^2$=$(CH_2)_{10}CH_3$).

Following the process described in Example 5, starting from methyl 2-aminooctanoate and dodecanoyl chloride, the title compound is prepared as a colourless oil (74% yield).
N.M.R. $^1H$ (300 MHz, $CDCl_3$) δ ppm: 0.88 (t, 6H); 1.26 (m, 24H); 1.63 (m, 4H); 2.22 (t, 2H); 3.75 (s, 3H); 4.63 (m, 1H).

EXAMPLE 9

Methyl 2-(3-phenylpropanesulfonylamino)octanoate (**XII**, $R^1$=H, n=6, A=$SO_2$, $R^2$=$(CH_2)_3C_6H_5$).

Following the process described in Example 5, starting from methyl 2-aminooctanoate and 3-phenylpropanesulfonyl chloride, the title compound is prepared as a yellowish oil (91% yield).
N.M.R. $^1H$ (300 MHz, $CDCl_3$) δ ppm: 0.85 (t, 3H); 1.24 (m, 8H); 1.68 (m, 2H); 2.10 (m, 2H); 2.71 (t, 2H); 2.95 (t, 2H); 3.70 (s, 3H); 4.00 (m, 1H); 7.20 (m, 5H).

EXAMPLE 10

Methyl 2-decanesulfonylamino-4-phenylbutanoate (**XII**, $R^1$=$C_6H_5$, n=2, A=$SO_2$, $R^2$=$(CH_2)_9CH_3$).

Following the process described in Example 5, starting from methyl 2-amino-4-phenylbutanoate, the title compound is prepared as a semisolid oil (75 % yield).
N.M.R. $^1$H (300 MHz, $CDCl_3$) δ ppm: 0.88 (t, 3H); 1.30 (m, 14H); 1.82 (m, 2H); 2.09 (m, 2H); 2.75 (m, 2H); 3.00 (m, 2H); 3.70 (s, 3H); 4.12 (m, 1H); 7.20 (m, 5H).

EXAMPLE 11

2-Decanesulfonylaminooctanol (**II**, $R^1$=H, n=6, A=$SO_2$, $R^2$=$(CH_2)_9CH_3$).

A solution of methyl 2-decanesulfonylaminooctanoate (7.5 g, 19.8 mmol) in THF (120 ml) is added with $NaBH_4$ (3.0 g, 79.4 mmol) and some drops of water. The mixture is refluxed for 18 h, then it is cooled to room temperature and the hydride excess is destroyed by addition of a 1M HCl solution (20 ml). Volatiles are eliminated under reduced pressure and the residue is dissolved in 500 ml of water-ethyl ether (1:2). The two phases are separated and the aqueous one is extracted with ethyl ether. The combined ethereal phases are dried and the solvent is removed, to obtain a crude compound which is purified by flash chromatography on a silica gel column. Eluting with 1:1 hexane: ethyl acetate, 6.3 g of the title compound are obtained as a white solid melting at 71-72°C (90 % yield).
N.M.R. $^1$H (300 MHz, $CDCl_3$)δ ppm: 0.83 (t, 6H); 1.33 (m, 24H); 1.76 (m, 2H); 3.00 (t, 2H); 3.34 (s, IH); 3.45-3.70 (m, 2H).

EXAMPLE 12

(R)-2-Decanesulfonylaminohexanol (**II**, $R^1$=H, n=4, A=$SO_2$, $R^2$=$(CH_2)_9CH_3$).

Following the process described in Example 11, starting from methyl (R)-2-dodecanesulfonylaminohexanoate, the title compound is prepared as a white solid melting at 76-77°C (83 % yield).
$[\alpha]_D^{20}$ =+11.4° (c=0.96, chloroform)
N.M.R. $^1$H (300 MHz, $CDCl_3$) δ ppm: 0.88 (t, 6H); 1.34 (m, 20H); 1.80 (m, 2H); 3.04 (m, 2H); 3.39 (m, 1H); 3.50-3.75 (m, 2H).

EXAMPLE 13

(S)-2-Decanesulfonylaminohexanol (**II**, $R^1$=H, n=4, A=$SO_2$, $R^2$=$(CH_2)_9CH_3$).

Following the process described in Example 11, starting from methyl (S)-2-dodecanesulfonylaminohexanoate, the title compound is prepared as a white solid melting at 76-77°C (77 % yield).
$[\alpha]_D^{20}$=-11.5° (c=0.99, chloroform)
N.M.R. $^1$H (300 MHz, $CDCl_3$) δ ppm: 0.88 (t, 6H); 1.34 (m, 20H); 1.80 (m, 2H); 3.04 (m, 2H); 3.39 (m, 1H); 3.50-3.75 (m, 2H).

EXAMPLE 14

2-Dodecanoylaminooctanol (**II**, $R^1$=H, n=6, A=CO, $R^2$=$(CH_2)_{10}CH_3$).

Following the process described in Example 11, starting from methyl 2-decanoylaminooctanoate, the title compound is prepared as a white solid melting at (86 % yield).
N.M.R. $^1$H (300 MHz, $CDCl_3$) δ ppm: 0.88 (t, 3H); 1.26 (m, 24H); 1.55 (m, 4H); 2.20 (t, 2H); 3.62 (m, 2H); 3.94 (m, 1H).

EXAMPLE 15

2-(3-Phenylpropanesulfonylamino)octanol (**II**, $R^1$=H, n=6, A=$SO_2$, $R^2$=$(CH_2)_3C_6H_5$).

Following the process described in Example 11, starting from methyl 2-(3-phenylpropanesulfonylamino)octanoate, the title compound is prepared as a yellowish solid melting at 60-61°C (90% yield).
N.M.R. $^1$H (300 MHz, $CDCl_3$) δ ppm: 0.85 (t, 3H); 1.25 (m, 8H); 1.45 (m, 2H); 2.12 (m, 2H); 2.70 (t, 2H); 3.00 (m, 2H); 3.30 (m, 1H); 3.40-3.68 (m, 2H); 7.20 (m, 5H).

EXAMPLE 16

2-Decanesulfonylamino-4-phenylbutanol (**II**, $R^1$=$C_6H_5$, n=2, A=$SO_2$, $R^2$=$(CH_2)_9CH_3$).

Following the process described in Example 11, starting from methyl 2-decanesulfonylamino-4-phenylbutanoate, the title compound is prepared as a white solid melting at 71-72°C (90% yield).
N.M.R. $^1H$ (300 MHz, $CDCl_3$) δ ppm: 0.89 (t, 3H); 1.28 (m, 14H); 1.82 (m, 4H); 2.72 (m, 2H); 3.00 (m, 2H); 3.45 (m, 1H); 3.55-3.70 (m, 2H); 7.20 (m, 5H).

EXAMPLE 17

(S)-2,2-Dimethyl-4-(1-hexenyl)-1,3-dioxolane (**XV**, $R^1$=H, q=4).

Pentyltriphenylphosphonium bromide

A solution of pentyl bromide (15.0 g, 99.3 mmol) in acetonitrile (250 ml), is added with 28.6 g (109.3 mmol) of triphenylphosphine. After refluxing for 4 days, the mixture is evaporated to dryness and the residue is treated with ethyl ether, to obtain 30.8 g of the title compound as a white solid melting at 162-165°C (75 % yield).

(S)-2,2-Dimethyl-4-(1-hexenyl)-1,3-dioxolane

A solution of pentyltriphenylphosphonium bromide (21.7 g 52.5 mmol) in anhydrous THF (150 ml) at 0°C and under inert atmosphere, is added with a 1.1M solution of butyl lithium (47.7 ml, 52.5 mmol). The mixture is stirred at 0°C for 1.5 h, after that a solution of (R)-2,3-O-isopropylideneglyceraldehyde previously distilled (6.2 g, 48.2 mmol) in THF (50 ml) is added. After stirring at 0°C for 18 h, the solvent is evaporated off to obtain a crude compound which is purified by flash chromatography on a silica gel column. Eluting with 9:1 petroleum ether:ethyl ether, 8.5 g of the title compound are obtained as a colourless oil (96 % yield).
$[\alpha]_D^{20}$ =+7.8° (c=1.01, chloroform)
N.M.R. $^1H$ (300 MHz, $CDCl_3$) δ ppm: 0.89 (t, 3H); 1.30 (m, 4H); 1.39 (s, 3H); 1.42 (s, 3H); 2.12 (m, 2H); 3.50 (t, 1H); 4.04 (dd, 1H); 4.83 (m, 1H); 5.39 (m, 1H); 5.62 (m, 1H).

EXAMPLE 18

(S)-3-Octen-1,2-diol (**XVI**, $R^1$=H, q=4).

A solution of (S)-2,2-dimethyl-4-(1-hexenyl)-1,3-dioxolane (8.5 g, 46.2 mmol) in THF (250 ml) is added with 220 ml of 6N HC1. The mixture is stirred for 2 h at room temperature and neutralized with $NaHCO_3$, the two phases are separated and the aqueous one is extracted with ethyl acetate, dried and the solvent is evaporated off, to obtain 5.2 g of the title compound as a colourless oil (quantitative yield).
$[\alpha]_D^{20}$ =+17.5° (c=1.01, chloroform)
$^1H$ N.M.R.(300MHz, $CDCl_3$) δ ppm: 0.87 (t, 3H); 1.31 (m, 4H); 2.07 (m, 2H); 3.50 (m, 2H); 4.51 (m, 1H); 5.32 (m, 1H); 5.53 (m, 1H).

EXAMPLE 19

(S)-3-Octan-1,2-diol (**XVII**, $R^1$=H, n=6).

A solution of (S)-3-octen-1,2-diol (1.3 g, 9.4 mmol) in methanol (60 ml) is added with 0.135 g of 10 % Pd-C and stirred at room temperature for 18 h, under hydrogen atmosphere. The mixture is filtered and evaporated to dryness to obtain 1.04 g of the title compound as a colourless oil.(76 % yield).
$[\alpha]_D^{20}$ =+2.7° (c=0.51, chloroform)
N.M.R. $^1H$ (300 MHz, $CDCl_3$) δ ppm: 0.85 (t, 3H); 1.25 (m, 8H); 1.39 (m, 2H); 3.40 (m, 1H); 3.61 (m, 2H).

EXAMPLE 20

(S)-1-Triphenylmethoxy-2-octanol (**XVIII**, $R^1$=H, n=6).

A solution of 3-octan-1,2-diol (0.85 g, 5.8 mmol) in dry pyridine (30 ml) is added with 3.6 g (11.3 mmol) of trityl

chloride. The solution is stirred for 24 h at room temperature. After that, it is poured onto an ice/water mixture, extracted with ethyl ether and washed in turn with 0.1M HCl to acid pH, 5% $NaHCO_3$ and water. The mixture is dried and the solvent is evaporated off, to obtain a crude compound which is purified by flash chromatography on a silica gel column. Eluting with 20:1 petroleum ether:ethyl ether mixtures, 1.9 g of the title compound are obtained as a semisolid oil (84 % yield).
$[\alpha]_D^{20}$ =+7.5° (c=1.05, chloroform)
N.M.R. $^1H$ (300 MHz, $CDCl_3$) δ ppm: 0.89 (t, 3H); 1.25 (m, 8H); 1.39 (m, 2H); 3.04 (dd, 1H); 3.19 (dd, 1H); 3.78 (m, 1H); 7.20-7.50 (m, 15H).

EXAMPLE 21

(S)-2-p-Toluenesulfoxy-l-triphenylmethoxyoctane (**XIX,** $R^1$=H, n=6).

A solution of (S)-1-triphenylmethoxy-2-octanol (1.2 g, 3.3 mmol) in chloroform (15 ml) at 0°C is added with 15 ml of pyridine and 1.0 g (5.1 mmol) of p-toluenesulfonyl chloride. The mixture is stirred at 0°C for 5 h. After that it is diluted with water (15 ml) and neutralized with 2M HCl. The two phases are separated and the aqueous one is extracted with chloroform. The combined phases organic are dried and the solvent is removed, to obtain 1.5 g of the title compound as a semisolid oil (84 % yield).
$[\alpha]_D^{20}$ =-6.3° (c=0.95, chloroform)
N.M.R. $^1H$ (300 MHz, $CDCl_3$) δ ppm: 0.85 (t, 3H); 1.13 (m, 8H); 1.67 (q, 2H); 2.42 (s, 3H); 3.17 (d, 2H); 4.59 (m, 1H); 7.20-7.80 (m, 19H).

EXAMPLE 22

(S)-1-Triphenylmethoxymethylheptylamine (**XX**, $R^1$=H, n=6).

A solution of (S)-2-p-toluenesulfoxy-1-triphenylmethoxyoctane (1.4 g, 2.7 mmol) in DMF (50 ml) is added with a solution of sodium azide (0.8 g, 12.3 mmol) in water (20 ml). The mixture is stirred at 70-80°C for 18 h, after that it is poured into water (30 ml), and extracted with ethyl ether. The ether phase is washed with a sodium chloride saturated solution, dried and the solvent is evaporated off, to obtain a crude compound which is used directly without purification in the following step.

This crude compound is redissolved in ethanol and is added with 0.11 g of 10% Pd-C. The mixture is stirred at room temperature for 1 h, under hydrogen atmosphere, then it is filtered and evaporated to dryness, to obtain a residue which is purified by flash chromatography on a silica gel column. Eluting with 99:1 chloroform:methanol mixtures, 0.7 g of the title compound are obtained as a semisolid oil (67 % yield).
$[\alpha]_D^{20}$ =-5.9° (c=0.97, chloroform)
N.M.R. $^1H$ (300 MHz, $CDCl_3$) δ ppm: 0.87 (t, 3H); 1.24 (m, 10H); 2.92 (m, 2H); 3.11 (m, 1H); 7.20-7.50 (m, 15H).

EXAMPLE 23

(R)-2-Decanesulfonylamino-1-triphenylmethoxyoctane (**XXI**, $R^1$=H, n=6, A=$SO_2$, $R^2$=$(CH_2)_9CH_3$).

Following the process described in Example 5, starting from (R)-l-triphenylmethoxymethylheptylamine, the title compound is prepared as a semisolid oil (89 % yield).
$[\alpha]_D^{20}$=-0.77° (c=0.48, chloroform)
N.M.R. $^1H$ (300 MHz, $CDCl_3$) δ ppm: 0.87 (m, 6H); 1.25 (m, 22H); 1.63 (m, 4H); 2.84 (m, 2H); 3.15 (dd, 1H); 3.25 (dd, 1H); 3.45 (m, 1H); 7.20-7.50 (m, 15H).

EXAMPLE 24

(R)-2-Decanesulfonylaminooctanol (**II**, $R^1$=H, n=6, A=$SO_2$, $R^2$=$(CH_2)_9CH_3$).

A solution of (R)-2-decanesulfonylamino-1-triphenylmethoxyoctane (0.6 g, 1.0 mmol) in dioxane (10 ml) is added with 2.7 ml of 1M HCl. The mixture is stirred at 80°C for 4h, after that it is neutralized with a $NaHCO_3$ saturated solution, extracted with ethyl acetate, dried and the solvent is removed, to obtain a crude compound which is purified by flash chromatography on silica gel column. Eluting with 7:3 hexane:ethyl acetate, 0.3 g the title compound are obtained as a white solid melting at 76-78°C (86 % yield).
$[\alpha]_D^{20}$ =+6.0° (c=0.96, chloroform)

N.M.R. $^1H$ (300 MHz, $CDCl_3$) δ ppm: 0.83 (t, 6H); 1.33 (m, 24H); 1.76 (m, 2H); 3.00 (t, 2H); 3.34 (s, 1H); 3.45-3.70 (m, 2H).

EXAMPLE 25

(S)-2-Decanesulfonylaminooctanol (**II**, $R^1$=H, n=6, A=$SO_2$, $R^2$=$(CH_2)_9CH_3$).

Following the process described in Examples 17-24, starting from (S)-2,3-O-isopropylideneglyceraldehyde, the title compound is prepared as a white solid melting at 76-77°C.
$[\alpha]_D^{20}$ =-5.8° (c=0.98, chloroform)
N.M.R. $^1H$ (300 MHz, $CDCl_3$) δ ppm: 0.83 (t, 6H); 1.33 (m, 24H); 1.76 (m, 2H); 3.00 (t, 2H); 3.34 (s, 1H); 3.45-3.70 (m, 2H).

EXAMPLE 26

2-Decanesulfonylaminooctanol-1-phospho-2-benzyloxyethanol (**I**, $R^1$=H, n=6, A=$SO_2$, $R^2$=$(CH_2)_9CH_3$, B=O, $R^3$=$CH_2CH_2OCH_2C_6H_5$).

A suspension of imidazole (5.6 g, 81.9 mmol), $PCl_3$ (2.2 ml, 24.6 mmol), $Et_3N$ (12 ml, 86.0 mmol) and dry acetonitrile (50 ml) at 0°C under inert atmosphere, is added during 30 min. with 2.0 g (5.7 mmol) of 2-decanesulfonylaminooctanol dissolved in 60 ml of dry toluene. The mixture is stirred for 6h at room temperature, then is added with water, left under stirring for 30 min, evaporated to dryness and redissolved in 150 ml of 4:1 pyridine:$Et_3N$, evaporated to dryness, added with water (100 ml), extracted with chloroform and dried. The solvent is removed, to obtain a solid residue which is used in the subsequent step without purification.

A mixture of this crude compound (2.7 g, 5.25 mmol), 2-benzyloxyethanol (1.3 g, 9.6 mmol) and 30 ml of dry pyridine is added with 0.76 ml (6.4 mmol) of pivaloyl chloride. The mixture is stirred for 5 h at room temperature, added with 1.6 ml of water and 1.5 g (5.8 mmol) of iodine. After stirring at room temperature for 45 min, the mixture is added with chloroform (30 ml), washed with a 5 % sodium metabisulfite solution, dried and the solvent is evaporated off, to obtain a crude compound which is purified by flash chromatography on a silica gel column. Eluting with 9:1 chloroform: methanol, 2.2 g of the title compound are obtained a colourless oil (67 % yield).
N.M.R. $^1H$ (300 MHz, $CDCl_3$) δ ppm: 0.87 (t, 6H); 1.25 (m, 24H); 1.78 (m, 2H); 2.99 (t, 2H); 3.48 (m, 1H); 3.67 (m, 2H); 3.90 (m, 1H); 4.10 (m, 1H); 4.18 (m, 2H); 4.55 (s, 2H); 7.30 (m, 5H).

EXAMPLE 27

(R)-2-Decanesulfonylaminooctanol-1-phospho-2-benzyloxyethanol (**I**, $R^1$=H, n=6, A=$SO_2$, $R_2$=$(CH_2)_9CH_3$, B=O, $R^3$=$CH_2CH_2OCH_2C_6H_5$).

Following the process described in Example 26, starting from (R)-2-decanesulfonylaminooctanol, the title compound is prepared as a yellowish oil (54 % yield).
$[\alpha]_D^{20}$ =+6.4° (c=0.43, chloroform).
N.M.R. $^1H$ (300 MHz, $CDCl_3$) δ ppm: 0.87 (t, 6H); 1.25 (m, 24H); 1.78 (m, 2H); 2.99 (t, 2H); 3.48 (m, 1H); 3.67 (m, 2H); 3.90 (m, 1H); 4.10 (m, 1H); 4.18 (m, 2H); 4.55 (s, 2H); 7.30 (m, 5H).

EXAMPLE 28

(S)-2-Decanesulfonylaminooctanol-1-phospho-2-benzy

loxyethanol (**I**, $R^1$=H, n=6, A=$SO_2$, $R^2$=$(CH_2)_9CH_3$, B=O, $R^3$=$CH_2CH_2OCH_2C_6H_5$).

Following the process described in Example 26, starting from (S)-2-decanesulfonylaminooctanol, the title compound is prepared as a yellowish oil (60 % yield).
$[\alpha]_D^{20}$ =-6.8° (c=0.43, chloroform)
N.M.R. $^1H$ (300 MHz, $CDCl_3$) δ ppm: 0.87 (t, 6H); 1.25 (m, 24H); 1.78 (m, 2H); 2.99 (t, 2H); 3.48 (m, 1H); 3.67 (m, 2H); 3.90 (m, 1H); 4.10 (m, 1H); 4.18 (m, 2H); 4.55 (s, 2H); 7.30 (m, 5H).

EXAMPLE 29

(R)-2-Decanesulfonylaminohexanol-1-phospho-2-benzyloxyethanol (**I**, $R^1$=H, n=4, A=$SO_2$, $R^2$=$(CH_2)_9CH_3$, B=O, $R^3$=$CH_2CH_2OCH_2C_6H_5$).

Following the process described in Example 26, starting from (R)-2-decanesulfonylaminohexanol, the title compound is prepared as a yellowish oil (52 % yield).
$[\alpha]_D^{20}$ =+10.1° (c=0.68, chloroform).
N.M.R. $^1$H (300 MHz, $CDCl_3$) δ ppm: 0.87 (t, 6H); 1.29 (m, 20H); 1.78 (m, 2H); 2.99 (t, 2H); 3.48 (m, 1H); 3.68 (m, 2H); 3.90 (m, 1H); 4.12 (m, 1H); 4.19 (m, 2H); 4.56 (s, 2H); 7.33 (m, 5H).

EXAMPLE 30

(S)-2-Decanesulfonylaminohexanol-1-phospho-2-benzyloxyethanol (**I**, $R^1$=H, n=4, A=$SO_2$, $R^2$=$(CH_2)_9CH_3$, B=O, $R^3$=$CH_2CH_2OCH_2C_6H_5$).

Following the process described in Example 26, starting from (S)-2-decanesulfonylaminohexanol, the title compound is prepared as a colourless oil (55 % yield).
$[\alpha]_D^{20}$ =-9.3° (c=0.7, chloroform).
N.M.R. $^1$H (300 MHz, $CDCl_3$) δ ppm: 0.87 (t, 6H); 1.29 (m, 20H); 1.78 (m, 2H); 2.99 (t, 2H); 3.48 (m, 1H); 3.68 (m, 2H); 3.90 (m, 1H); 4.12 (m, 1H); 4.19 (m, 2H); 4.56 (s, 2H); 7.33 (m, 5H).

EXAMPLE 31

2-Dodecanoylaminooctanol-1-phospho-2-benzyloxyethanol (**I**, $R^1$=H, n=6, A=CO, $R^2$=$(CH_2)_{10}CH_3$, B=O, $R^3$=$CH_2CH_2OCH_2C_6H_5$).

Following the process described in Example 26, starting from 2-dodecanoylaminooctanol, the title compound is prepared as a yellowish oil (78 % yield).
N.M.R. $^1$H (300 MHz, $CDCl_3$) δ ppm: 0.87 (t, 6H); 1.25 (m, 24H); 1.60 (m, 4H); 2.20 (t, 2H); 3.67 (m, 2H); 4.05 (m, 5H); 4.55 (s, 2H); 7.33 (m, 5H).

EXAMPLE 32

2-(3-Phenylpropanesulfonylamino)octanol-1-phospho-2-benzyloxyethanol (**I**, $R^1$=H, n=6, A=$SO_2$, $R^2$=$(CH_2)_3C_6H_5$, B=O, $R^3$=$CH_2CH_2OCH_2C_6H_5$).

Following the process described in Example 26, starting from 2-(3-phenylpropanesulfonylamino)octanol, the title compound is prepared as a colourless oil (52 % yield).
N.M.R. $^1$H (300 MHz, $CDCl_3$) δ ppm: 0.88 (t, 3H); 1.25 (m, 10H); 2.05 (m, 2H); 2.65 (t, 2H); 2.98 (m, 2H); 3.38 (m, 1H); 3.55 (m, 2H); 3.70-3.90 (m, 2H); 4.00 (m, 2H); 4.50 (s, 2H); 7.20 (m, 10H).

EXAMPLE 33

2-Decanesulfonylamino-4-phenylbutanol-1-phospho-2-benzyloxyethanol (**I**, $R^1$=$C_6H_5$, n=2, A=$SO_2$, $R^2$=$(CH_2)_9CH_3$, B=O, $R^3$=$CH_2CH_2OCH_2C_6H_5$).

Following the process described in Example 26, starting from 2-decanesulfonylamino-4-phenylbutanol, the title compound is prepared as a colourless oil (57 % yield).
N.M.R. $^1$H (300 MHz, $CDCl_3$) δ ppm: 0.88 (t, 3H); 1.25 (m, 14H); 1.78 (m, 4H); 2.65 (m, 2H); 2.98 (m, 2H); 3.50 (m, 1H); 3.60 (m, 2H); 3.98 (m, 1H); 4.15 (m, 3H); 4.50 (m, 2H); 7.25 (m, 10H).

EXAMPLE 34

2-Decanesulfonylaminooctanol-1-phosphoethanol (**I**, $R^1$=H, n=6, A=$SO_2$, $R^2$=$(CH_2)_9CH_3$, B=O, $R^3$=$CH_2CH_3$).

Following the process described in Example 26, starting from 2-decanesulfonylaminooctanol and ethanol, the title compound is prepared as a colourless oil (68 % yield).

N.M.R. $^1H$ (300 MHz, $CDCl_3$) δ ppm: 0.88 (t, 6H); 1.28 (m, 25H); 1.55 (m, 2H); 1.80 (m, 2H); 3.00 (t, 2H); 3.50 (m, 1H); 3.90-4.20 (m, 4H).

EXAMPLE 35

2-Dodecanoylaminooctanol-1-phosphoethanol (**I**, $R^1$=H, n=6, A=CO, $R^2=(CH_2)_{10}CH_3$, B=O, $R^3=CH_2CH_3$).

Following the process described in Example 26, starting from 2-dodecanoylaminooctanol and ethanol, the title compound is prepared as a colourless oil (60 % yield).
N.M.R. $^1H$ (300 MHz, $CD_3OD$) δ ppm: 0.98 (t, 6H); 1.34 (m, 27H); 1.69 (m, 4H); 2.29 (t, 2H); 3.80-4.15 (m, 5H).

EXAMPLE 36

2-Dodecanoylaminooctanol-1-phosphate (**I**, $R^1$=H, n=6, A=CO, $R^2=(CH_2)_{10}CH_3$, B=O, $R^3$=H).

Following the process described in Example 26, but carrying out directly the oxidation of the intermediate phosphonate with iodine, water and pyridine as described in said example, starting from 2-dodecanoylaminooctanol, the title compound is prepared as a colourless oil (60 % yield).
N.M.R. $^1H$ (300 MHz, $CD_3OD$) δ ppm: 0.98 (t, 6H); 1.38 (m, 24H); 1.69 (m, 4H); 2.29 (t, 2H); 3.86 (t, 2H); 4.05 (m, 1H).

EXAMPLE 37

2-Decanesulfonaminooctyl butylphosphonate (**I**, $R^1$=H, n=6, A=$SO_2$, $R^2=(CH_2)_9CH_3$, B=$CH_2$, $R^3=(CH_2)_2CH_3$).

Methyl butylphosphonic acid chloride

A 80% NaH suspension (1.26 g, 42.0 mmol) and dry DMF (80 ml) is added at 0°C with 3.4 ml (36.5 mmol) of dimethylphosphite. The mixture is stirred for 1 h at room temperature, then it is left to cool to 0°C and added with a solution of n-butyl bromide (3.9 ml, 36.5 mmol) in DMF (10 ml). The mixture is stirred for 4 h at room temperature, then added with some drops of methanol and water, extracted with ethyl ether, dried and the solvent is evaporated off, to obtain 4.2 g of dimethyl butylphosphonate as a colourless oil. The obtained compound is dissolved in 60 ml of a 1.7 M NaOH methanol solution. The mixture is stirred at 100°C for 7 h, after that is evaporated to dryness, redissolved in water and extracted with ethyl ether. The ether phase is washed with diluted HCl to acid pH, dried and the solvent is removed, to obtain 3.3 g methyl butylphosphonic acid (85% yield). This compound is added with 50 ml of thionyl chloride and the mixture is stirred at 80°C for 1h, then it is evaporated to dryness to obtain a crude compound formed mainly by the title compound (quantitative yield).
N.M.R. $^1H$ (300 MHz, $CDCl_3$) δ ppm: 0.90 (t, 3H); 1.40 (m, 2H); 1.65 (m, 2H); 2.10 (m, 2H); 3.82 (d, 3H).

2-Decanesulfonaminooctyl butylphosphonate

A solution of 2-decanesulfonylaminooctanol (0.45 g, 1.3 mmol) in chloroform (23 ml) is added with triethylamine (0.9 ml, 6.4 mmol), DMAP (0.16 g, 0.28 mmol) and methyl butylphosphonic acid chloride (0.36 g, 2.6 mmol). The mixture is stirred at 0°C for 18 h, diluted with chloroform, washed with 0.2 M HCl, dried and the solvent is removed, to obtain a crude compound mainly formed by 2-decanesulfonamidooctyl methyl butylphosphonate. This crude compound is redissolved in 5 ml of dry chloroform and 4 ml of trimethylamine are added thereto. The mixture is stirred in a sealed reactor at 65-70°C for 24 h. After that it is evaporated to dryness, to obtain a residue which is purified by chromatography on a silica gel column. Eluting with 20:1 chloroform:methanol, 0.33 g of the title compound are obtained as a colourless oil (57 yield).
N.M.R. $^1H$ (300 MHz, $CDCl_3$) δ ppm: 0.88 (m, 9H); 1.30 (m, 24H); 1.50 (m, 4H); 1.75 (m, 4H); 3.00 (t, 2H); 3.48 (m, 1H); 4.01 (m, 2H).

EXAMPLE 38

2-Decanesulfonaminooctyl (4-phenylbutyl)phosphonate (**I**, $R^1$=H, n=6, A=$SO_2$, $R^2=(CH_2)_9CH_3$, B=$CH_2$, $R^3=(CH_2)_3C_6H_5$).

Following the process described in Example 41, starting from 2-decanesulfonylaminooctanol and methyl (4-phenylbutyl)phosphonic acid chloride, the title compound is prepared as a colourless oil (86 % yield).

N.M.R. $^1H$ (300 MHz, $CDCl_3$) δ ppm: 0.87 (m, 6H); 1.20-1.75 (m, 32H); 2.59 (t, 2H); 3.02 (m, 2H); 3.48 (m, 1H); 3.80 (m, 1H); 4.05 (m, 1H); 7.20 (m, 5H).

EXAMPLE 39

2-Dodecanoylaminooctyl butylphosphonate (**I**, $R^1$=H, n=6, A=CO, $R^2=(CH_2)_{10}CH_3$, B=$CH_2$, $R^3=(CH_2)_2CH_3$).

Following the process described in Example 41, starting from 2-dodecanoylaminooctanol, the title compound is prepared as a colourless oil (53 % yield).
N.M.R. $^1H$ (300 MHz, $CDCl_3$) δ ppm: 0.88 (m, 9H); 1.20-1.80 (m, 34H); 2.22 (t, 2H); 3.65 (m, 1H); 3.81 (m, 1H); 4.00 (m, 1H).

Determination of the inhibition of phospholipase A2.

The activity of $PLA_2$ is determined by quantification of the radioactively labelled fatty acid ($^{14}C$-arachidonic) which esterifies the sn-2 position of the phospholipid substrate and which is released by the action of the enzyme. As a substrate 1-palmitoyl-2-[1-$^{14}C$]arachidonoylphosphatidylethanola-mine vesicles are used, prepared according to the following process: the desired amount of phospholipid is resuspended in 50 mM HEPES buffer, pH 7.0, by strong stirring, the suspension is heated to 60°C and subsequently sonicated in a bath until the mixture becomes translucent. The sonicated vesicles are kept at room temperature for 30 minutes. $PLA_2$ from previously purified human synovial liquid is used as an enzyme.

The reaction mixture contains the necessary amount of vesicles corresponding to 200 nmoles of phospholipid and 10,000 d.p.m., $CaCl_2$ (2mM) and NaCl (150mM), in a total volume of 0.5 ml. The reaction is started by addition of the enzyme (50-100 ng). After 4 minutes at 37°C the reaction is interrupted adding 3.0 ml of a $CHCl_3$:$CH_3OH$ mixture (1: 2 v/v). The lipids are extracted according to the procedure by Bligh & Dyer and the reaction products are separated by thin layer chromatography and quantified by liquid scintillation.

The evaluation of the inhibiting effect on the $PLA_2$ activity by the compounds of the present invention is carried out by formation of mixed vesicles, which are used subsequently as a substrate for the enzyme. The preparation of said mixed vesicles includes a first step in which known amounts of substrate and compound are mixed in a suitable solvent. The total amount of lipid is kept constant (200 nmoles) varying the molar fraction of the compound ($X_i$). The solvent of the mixture is evaporated off under nitrogen stream, and the mixed vesicles are formed as described above.

In both cases (absence and presence of the inhibitor) the enzymatic activity is defined as nmoles of [$^{14}C$]-arachidonic acid released per minute.

The inhibiting capability of the different compounds is expressed as the molar fraction of the product in the vesicle ($X_i$) which causes a 50% decrease of the enzyme activity with respect to the control in the absence of inhibitor. Some examples of the obtained results are reported in table 1. For comparison, 2-dodecanoylaminooctanol-1-phospho-2-benzyloxyethanol (compound A) was also tested, which was described in literature as a strong inhibitor of $PLA_2$ in vitro (De Haas G. H. et al., Biochim. Biophys. Acta, 1046, 249 (1990)).

Table 1.

| **Inhibiting effect on PLA2 from human synovial liquid.** | |
|---|---|
| **Compound №** | **Xi(50)** |
| 26 | 0.0036 |
| 27 | 0.0048 |
| 28 | 0.015 |
| 32 | 0.024 |
| 39 | 0.0025 |
| 40 | 0.040 |
| 41 | 0.050 |
| 43 | 0.012 |
| Compound A | 0.010 |

Antiinflammatory activity, Inhibition of the carrageenin plantar oedema in the rat.

The antiinflammatory action of the compounds of the present invention is determined by a standard test based on

the procedure by Winter C.A. et al. (Proc. Soc. Exp. Biol. Med., 111, 544 (1962)). In this test, male Sprague-Dawley rats of 90-110 g are used, which are randomized in groups of 5 animals. The compound under test is administered intravenously in the tail lateral vein. The compound is suspended in Tween 20 (2-3% final concentration) and physiological serum is added to obtain a solution of the desired concentration of the compound, the administered volume being 2.5 ml/kg. Immediately after the injection of the compound, a subplantar injection of 0.1 ml of 1% carrageenin in physiological serum is performed in the right paw of the rat. In each test, a control group is systematically used, which is administered with the vehicle only. The paw inflammation is evaluated by measuring its volume with a water plethysmograph 1, 3 and 6 hours after inducing the inflammation. The determination of the inhibition percentage of the inflammation is calculated by the following formula:

$$\% \text{ Inhibition} = (1 - A/B) \times 100$$

wherein A is the average of the swelling volume in the group of treated animals and B is the average of the swelling volume in the control group.

Table 2 shows the inhibition values found for some of the compounds of the present invention. For comparison purposes, the inhibition values of indomethacin and ketoprofen are also included as reference. The inhibition value found for Compound A, a structural analogous of the compounds described in the present patent, is also shown.

Table 2.

| Antiinflammatory effect. Carrageenin plantar oedema test in the rat. | | |
|---|---|---|
| Compound № | Dose (mg/Kg) | % Inhibition (3 hours) |
| 26 | 10 | 41 |
| | 5 | 37 |
| | 2.5 | 26 |
| 27 | 5 | 36 |
| 28 | 5 | 19 |
| 29 | 5 | 27 |
| 30 | 5 | 12 |
| 32 | 5 | 35 |
| 38 | 5 | 23 |
| 39 | 5 | 17 |
| 40 | 5 | 22 |
| 43 | 5 | 22 |
| Indomethacin | 5 | 37 |
| Ketoprofen | 5 | 37 |
| Compound A | 10 | 14 |

## Claims

1. Compounds of formula (I)

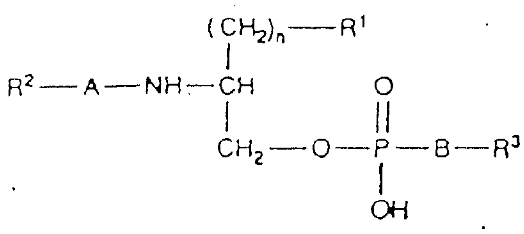

I

wherein $R^1$ is hydrogen or phenyl;
n is an integer from 2 to 18 included;

A is a -CO- or -$SO_2$- group;
$R^2$ is a $C_1$-$C_{20}$ straight or branched alkyl group or a phenylalkyl of less than 20 carbon atoms;
B is an oxygen atom or a methylene group;
$R^3$ is hydrogen, a $C_1$-$C_6$ straight or branched alkyl, a phenylalkyl group of less than 12 carbon atoms, a -$(CH_2)_m$O$R^4$ group, wherein m is a integer from 2 to 6 and $R^4$ is a $C_1$-$C_4$ straight or branched alkyl group, or a phenylalkyl group of less than 10 carbon atoms; with the provisos that the -B-$R^3$ group cannot be -$OCH_2CH_2OH$ when A is -CO- and $R^1$ is H, nor when A is -$SO_2$-, $R^1$ is hydrogen and n is lower than 5; and, when B is an oxygen atom, A is a -CO- group, $R_1$ is H, n is 10 -18, $R_3$ is not hydrogen, methyl, ethyl, the stereoisomers and mixtures thereof, as well as the pharmaceutically acceptable salts thereof.

**2.** Compounds as claimed in claim 1, wherein B is oxygen and $R^3$ is hydrogen, a $C_1$-$C_6$ straight alkyl group, a phenylalkyl group of less than 12 carbon atoms, a -$(CH_2)_m$O$R^4$ group, wherein m is an integer from 2 and 4 and $R^4$ is a phenylmethyl group.

**3.** Compounds according to claim 2, wherein $R^3$ is hydrogen, ethyl or butyl.

**4.** Compounds according to claim 2, wherein $R^3$ is the -$(CH_2)_2$O$R^4$ group, wherein $R^4$ is phenylmethyl.

**5.** Compounds according to claim 1, wherein B is a methylene group and $R^3$ is a $C_1$-$C_6$ straight alkyl group or a phenylalkyl group of less than 12 carbon atoms.

**6.** Compounds according to claim 2, wherein A is a -$SO_2$- group and $R^2$ is a $C_1$-$C_{20}$ straight alkyl group or a phenylalkyl group of less than 20 carbon atoms.

**7.** Compounds according to claim 5, wherein A is a -$SO_2$- group and $R^2$ is a $C_1$-$C_{20}$ straight alkyl group or a phenylalkyl group of less than 20 carbon atoms.

**8.** Compounds according to claim 2, wherein A is a -CO-group and $R^2$ is a $C_1$-$C_{20}$ straight alkyl group or a phenylalkyl group of less than 20 carbon atoms.

**9.** Compounds according to claim 5, wherein A is a -CO-group and $R^2$ is a $C_1$-$C_{20}$ straight alkyl group or a phenylalkyl group of less than 20 carbon atoms.

**10.** Compounds according to the above claims, which are:

2-Decanesulfonylaminooctanol-1-phospho-2-benzyloxyethanol,
(R)-2-Decanesulfonylaminooctanol-1-phospho-2-benzyloxyethanol,
(S)-2-Decanesulfonylaminooctanol-1-phospho-2-benzyloxyethanol,
(R)-2-Decanesulfonylaminohexanol-1-phospho-2-benzyloxyethanol,
(S)-2-Decanesulfonylaminohexanol-1-phospho-2-benzyloxyethanol,
2-Dodecanoylaminooctanol-1-phospho-2-benzyloxyethanol,
2-(3-Phenylpropanesulfonylamino)octanol-1-phospho-2-benzyloxyethanol,
2-Decanesulfonylamino-4-phenylbutanol-1-phospho-2-benzyloxyethanol,
2-Decanesulfonylaminooctanol-1-phosphoethanol,
2-Dodecanoylaminooctanol-1-phosphoethanol,
2-Dodecanoylaminooctanol-1-phosphate,
2-Decanesulfonaminooctyl butylphosphonate,
2-Decanesulfonaminooctyl (4-phenylbutyl)phosphonate,
2-Dodecanoylaminooctyl butylphosphonate.

**11.** A process for the preparation of the compounds of claim 1, in which process a compound of formula **(II)** of suitable stereochemistry at the 2-carbon,

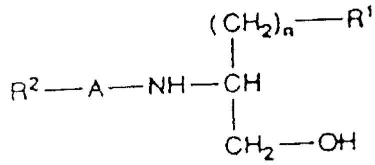

II

wherein $R^1$, n, A and $R^2$ have the above mentioned meanings, is subjected to one of the following reactions:

a) When in **(I)** B is a oxygen, compound **(II)** is reacted with a reactive $PX_3$, wherein X is a halogen, in the presence of a proton-binding base and a mildly nucleophilic base, in suitable organic solvents, at a temperature from 0° and 40°C for a time from 3 and 18 hours, thereby obtaining a compound of formula **(III)**,

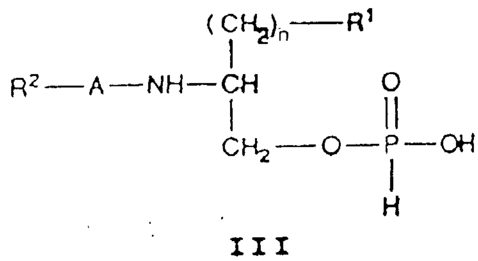

III

subsequently this intermediate is reacted with a compound **(IV)**,

$HO\text{-}R^7$ **(IV)** (IV)

wherein, $R^7$ can be equivalent to the group $R^3$ in formula **(I)** except for hydrogen; in an organic solvent, at a temperature from 0° to 25°C for a time from 1 to 6 hours, to obtain an intermediate of formula **(V)**,

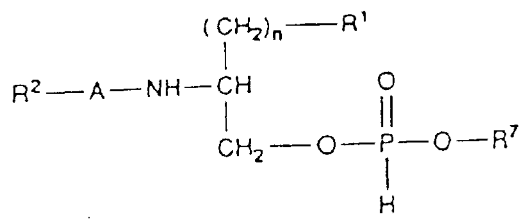

V

which is oxidized in a suitable solvent at a temperature from 0° to 25°C for a time from 1 to 5 hours, to obtain an intermediate **(VI)**,

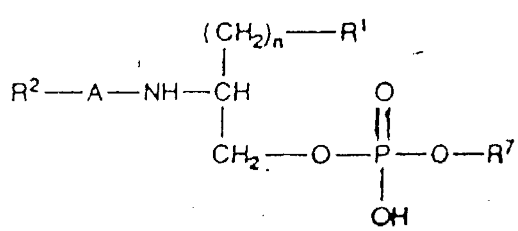

VI

wherein $R^1$, n, A, $R^2$ and $R^7$ have the above mentioned meanings; finally, if necessary, converting compound **(VI)** into **(I)** by removing any protecting groups present in $R^7$;

b) When in **(I)** B is oxygen and $R^3$ is hydrogen, the compound **(II)** is reacted as in a) to give the intermediate **(III)** which is then directly oxidized;

c) When in **(I)** B is a methylene group, compound **(II)** is reacted with a reactive **(VII)**,

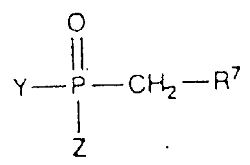

VII

wherein Y and Z are halogen or a methoxy group, in the presence of an amine, in a suitable organic solvent, at a temperature from 0° to 40°C for a time from 3 to 24 hours, to obtain an intermediate of formula **(VIII)**,

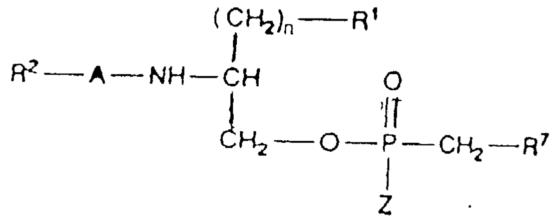

VIII

wherein $R^1$, n, A, $R^2$, Z and $R^7$ have the above mentioned meanings; compound **(VIII)** is subjected to acid hydrolysis in aqueous medium, when Z is halogen, or to treatment with a suitable nucleophilic agent, when Z is a methoxide group, to obtain a compound **(IX)**,

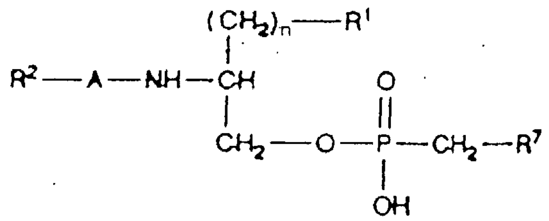

IX

wherein $R^1$, n, A, $R^2$ and $R^7$ have the above mentioned meanings; finally, if necessary, compound **(IX)** is converted into **(I)** by removing any protecting groups present in $R^7$.

**12.** Pharmaceutical compositions containing one compound of claims 1 to 10 as the active ingredient, together with suitable excipients.

**13.** The use of the compounds of claims 1 to 10 for the preparation of a medicament for the treatment of inflammatory and allergic diseases such as rheumatic arthritis, tendinitis, bursitis, psoriasis, bronchial asthma.

**Patentansprüche**

**1.** Verbindungen der Formel (I)

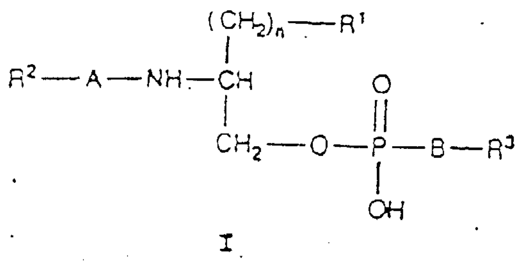

I

wobei $R^1$ Wasserstoff oder Phenyl ist;
n eine ganze Zahl von einschließlich 2 bis 18 ist;
A eine -CO- oder -$SO_2$-Gruppe ist;
$R^2$ eine geradkettige oder verzweigte $C_1$-$C_{20}$-Alkylgruppe oder eine Phenylalkylgruppe mit weniger als 20 Kohlenstoffatomen ist;
B ein Sauerstoffatom oder eine Methylengruppe ist;
$R^3$ Wasserstoff, eine geradkettige oder verzweigte $C_1$-$C_6$-Alkylgruppe, eine Phenylalkylgruppe mit weniger als 12 Kohlenstoffatomen, eine -$(CH_2)_mOR^4$-Gruppe ist, wobei m eine ganze Zahl von 2 bis 6 ist und $R^4$ eine geradkettige oder verzweigte $C_1$-$C_4$-Alkylgruppe ist, oder eine Phenylalkylgruppe mit weniger als 10 Kohlenstoffatomen; unter den Voraussetzungen, daß die -B-$R^3$-Gruppe nicht-$OCH_2CH_2OH$ sein kann, wenn A -CO-ist und $R^1$ H ist, noch wenn A - $SO_2$- ist, $R^1$ Wasserstoff ist und n kleiner ist als 5; und wenn B ein Sauerstoffatom ist, A eine -CO-Gruppe ist, $R^1$ H ist, n 10 bis 18 ist, $R^3$ nicht Wasserstoff, Methyl, Ethyl ist, ihre Stereoisomere und Mischungen genauso wie ihre pharmazeutisch verträglichen Salze.

**2.** Verbindungen wie in Anspruch 1 beansprucht, wobei B Sauerstoff ist und $R^3$ Wasserstoff, eine geradkettige $C_1$-$C_6$-Alkylgruppe, eine Phenylalkylgruppe mit weniger als 12 Kohlenstoffatomen, eine -$(CH_2)_mOR^4$-Gruppe ist, wobei m eine ganze Zahl von 2 bis 4 ist und $R^4$ eine Phenylmethylgruppe ist.

**3.** Verbindungen nach Anspruch 2, wobei $R^3$ Wasserstoff, Ethyl oder Butyl ist.

**4.** Verbindungen nach Anspruch 2, wobei $R^3$ die -$(CH_2)_2OR^4$-Gruppe ist, wobei $R^4$ Phenylmethyl ist.

**5.** Verbindungen nach Anspruch 1, wobei B eine Methylengruppe ist und $R^3$ eine geradkettige $C_1$-$C_6$-Alkylgruppe oder eine Phenylalkylgruppe mit weniger als 12 Kohlenstoffatomen ist.

**6.** Verbindungen nach Anspruch 2, wobei A eine -$SO_2$-Gruppe ist und $R^2$ eine geradkettige $C_1$-$C_{20}$-Alkylgruppe oder eine Phenylalkylgruppe mit weniger als 20 Kohlenstoffatomen ist.

**7.** Verbindungen nach Anspruch 5, wobei A eine -$SO_2$-Gruppe ist und $R^2$ eine geradkettige $C_1$-$C_{20}$-Alkylgruppe oder eine Phenylalkylgruppe mit weniger als 20 Kohlenstoffatomen ist.

**8.** Verbindungen nach Anspruch 2, wobei A eine -CO-Gruppe ist und $R^2$ eine geradkettige $C_1$-$C_{20}$-Alkylgruppe oder eine Phenylalkylgruppe mit weniger als 20 Kohlenstoffatomen ist.

**9.** Verbindungen nach Anspruch 5, wobei A eine -CO-Gruppe ist und $R^2$ eine geradkettige $C_1$-$C_{20}$-Alkylgruppe oder eine Phenylalkylgruppe mit weniger als 20 Kohlenstoffatomen ist.

**10.** Verbindungen entsprechend den vorstehenden Ansprüchen, die sind:

2-Decansulfonylaminooctanol-1-phospho-2-benzyloxyethanol
(R)-2-Decansulfonylaminooctanol-1-phospho-2-benzyloxyethanol,
(S)-2-Decansulfonylaminooctanol-1-phospho-2-benzyloxyethanol,
(R)-2- Decansulfonylaminohexanol-1-phospho-2-benzyloxyethanol,
(S)-2-Decansulfonylaminohexanol-1-phospho-2-benzyloxyethanol,
2-Dodecanoylaminooctanol-1-phospho-2-benzyloxyethanol,
2-(3-Phenylpropansulfonylamino)octanol-1-phospho-2-benzyloxyethanol,
2-Decansulfonylamino-4-phenylbutanol-1-phospho-2-benzyloxyethanol,

2-Decansulfonylaminooctanol-1-phosphoethanol,
2-Dodecanoylaminooctanol-1-phosphoethanol,
2-Dodecanoylaminooctanol-1-phosphat,
2-Decansulfonaminooctyl-butylphosphonat,
2-Decansulfonaminooctyl-(4-phenylbutyl)phosphonat,
2-Dodecanoylaminooctyl-butylphosphonat.

**11.** Verfahren zur Herstellung der Verbindungen nach Anspruch 1, wobei in dem Verfahren eine Verbindung der Formel (II) mit geeigneter Stereochemie am 2-Kohlenstoffatom

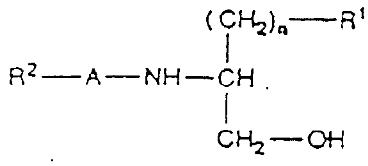

II

wobei $R^1$, n, A und $R^2$ die oben genannten Bedeutungen haben, einer der folgenden Reaktion unterworfen wird:

a) wenn B in (I) Sauerstoff ist, wird Verbindung (II) mit einem reaktiven $PX_3$ umgesetzt, wobei X Halogen ist, in Gegenwart einer Protonen-bindenden Base und einer schwach nukleophilen Base in geeigneten organischen Lösungsmitteln bei einer Temperatur von 0°C bis 40°C während einer Zeit von 3 bis 18 Stunden, wobei eine Verbindung der Formel (III) erhalten wird

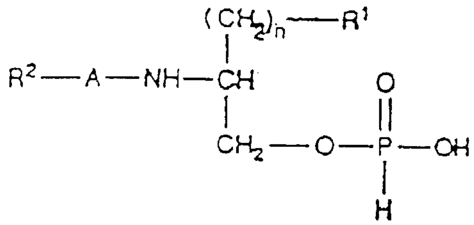

III

anschließend wird dieses Zwischenprodukt mit einer Verbindung (IV) umgesetzt

$$HO\text{-}R^7 \qquad \text{(IV)}$$

wobei $R^7$ äquivalent zur Gruppe $R^3$ in Formel (I) sein kann mit Ausnahme von Wasserstoff; in einem organischen Lösungsmittel bei einer Temperatur von 0°C bis 25°C während einer Zeit von 1 bis 6 Stunden zur Herstellung eines Zwischenprodukts der Formel (V)

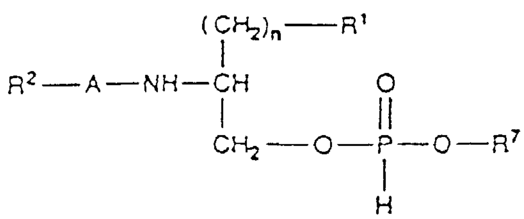

V

das in einem geeigneten Lösungsmittel bei einer Temperatur von 0°C bis 25°C während einer Zeit von 1 bis 5 Stunden oxidiert wird, zur Herstellung eines Zwischenprodukts (VI),

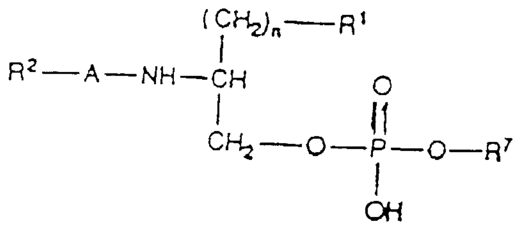

VI

wobei $R^1$, n, A, $R^2$ und $R^7$ die oben genannten Bedeutungen haben; und schließlich, falls notwendig, Umwandlung der Verbindung (VI) in (I) durch Entfernung von in $R^7$ vorhandenen Schutzgruppen;

b) wenn B in (I) Sauerstoff ist und $R^3$ Wasserstoff ist, wird die Verbindung (II) wie in a) zur Herstellung des Zwischenprodukts (III) umgesetzt, das dann direkt oxidiert wird;

c) wenn B in (I) eine Methylengruppe ist, wird Verbindung (II) mit einem reaktiven (VII) umgesetzt,

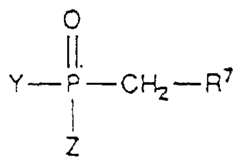

VII

wobei Y und Z Halogen oder eine Methoxygruppe sind, in Gegenwart eines Amins in einem geeigneten organischen Lösungsmittel bei einer Temperatur von 0°C bis 40°C während einer Zeit von 3 bis 24 Stunden zur Herstellung eines Zwischenprodukts der Formel (VIII)

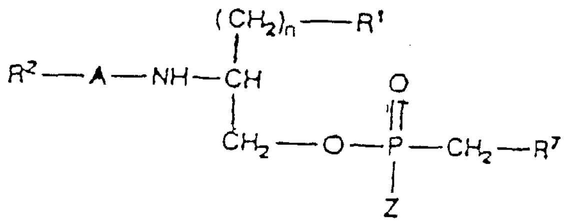

VIII

wobei $R^1$, n, A, $R^2$, Z und $R^7$ die oben genannten Bedeutungen haben; Verbindung (VIII) wird einer sauren Hydrolyse im wäßrigen Medium unterworfen, wenn Z Halogen ist, oder einer Behandlung mit einem geeigneten nukleophilen Mittel, wenn Z eine Methoxid-Gruppe ist, zur Herstellung einer Verbindung (IX),

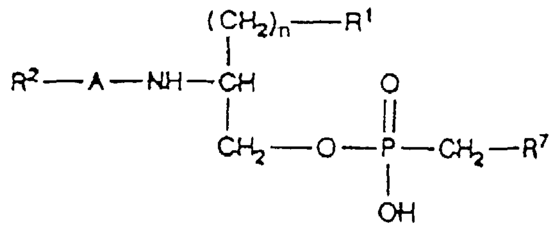

IX

wobei $R^1$, n, A, $R^2$ und $R^7$ die oben genannten Bedeutungen haben;
schließlich, falls notwendig, Verbindung (IX) durch Entfernung von in $R^7$ vorhandenen Schutzgruppen in (I) umgewandelt.

12. Pharmazeutische Zusammensetzungen, die eine Verbindung der Ansprüche 1 bis 10 als aktiven Bestandteil gemeinsam mit geeigneten Exzipienten enthalten.

13. Verwendung der Verbindungen der Ansprüche 1 bis 10 zur Herstellung eines Medikaments für die Behandlung von entzündlichen und allergischen Erkrankungen wie rheumatische Arthritis, Tendinitis, Bursitis, Psoriasis, Bronchialasthma.

**Revendications**

1. Composés de formule (I)

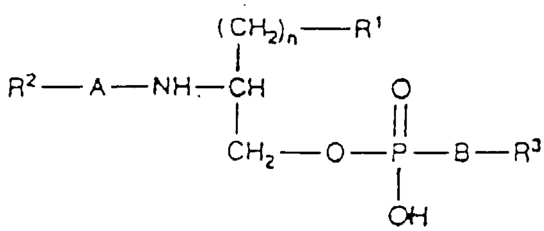

I

dans laquelle $R^1$ est de l'hydrogène ou un groupe phényle ;
n est un entier de 2 à 18 inclus ;
A est un groupe -CO- ou $-SO_2-$ ;
$R^2$ est un groupe alkyle en $C_1$ à $C_{20}$ linéaire ou ramifié ou un groupe phénylalkyle de moins de 20 atomes de carbone ;
B est un atome d'oxygène ou un groupe méthylène ;
$R^3$ est de l'hydrogène, un groupe alkyle en $C_1$ à $C_6$ linéaire ou ramifié, un groupe phénylalkyle de moins de 12 atomes de carbone, un groupe $-(CH_2)_mOR^4$, où m est un entier de 2 à 6 et $R^4$ est un groupe alkyle en $C_1$ à $C_4$ linéaire ou ramifié ou un groupe phénylalkyle de moins de 10 atomes de carbone ; avec les conditions que le groupe $-B-R^3$ ne peut pas être $-OCH_2CH_2OH$ lorsque A est -CO- et $R^1$ est H, ni lorsque A est $-SO_2-$, $R^1$ est de l'hydrogène et n est inférieur à 5 ; et que, lorsque B est un atome d'oxygène, A est un groupe -CO-, $R^1$ est H, n est 10 à 18, $R^3$ n'est pas de l'hydrogène, un groupe méthyle, éthyle,

les stéréoisomères et mélanges de ceux-ci, ainsi que les sels pharmaceutiquement acceptables de ceux-ci.

2. Composés selon la revendication 1, dans lesquels B est de l'oxygène et $R^3$ est de l'hydrogène, un groupe alkyle linéaire en $C_1$ à $C_6$, un groupe phénylalkyle de moins de 12 atomes de carbone, un groupe $-(CH_2)_mOR^4$, où m est un entier de 2 à 4 et $R^4$ est un groupe phénylméthyle.

3. Composés selon la revendication 2, dans lesquels $R^3$ est de l'hydrogène, un groupe éthyle ou butyle.

**4.** Composés selon la revendication 2, dans lesquels $R^3$ est le groupe $-(CH_2)_2OR^4$, où $R^4$ est un groupe phénylméthyle.

**5.** Composés selon la revendication 1, dans lesquels B est un groupe méthylène et $R^3$ est un groupe alkyle linéaire en $C_1$ à $C_6$ ou un groupe phénylalkyle de moins de 12 atomes de carbone.

**6.** Composés selon la revendication 2, dans lesquels A est un groupe $-SO_2-$ et $R^2$ est un groupe alkyle linéaire en $C_1$ à $C_{20}$ ou un groupe phénylalkyle de moins de 20 atomes de carbone.

**7.** Composés selon la revendication 5, dans lesquels A est un groupe $-SO_2-$ et $R^2$ est un groupe alkyle linéaire en $C_1$ à $C_{20}$ ou un groupe phénylalkyle de moins de 20 atomes de carbone.

**8.** Composés selon la revendication 2, dans lesquels A est un groupe -CO- et $R^2$ est un groupe alkyle linéaire en $C_1$ à $C_{20}$ ou un groupe phénylalkyle de moins de 20 atomes de carbone.

**9.** Composés selon la revendication 5, dans lesquels A est un groupe -CO- et $R^2$ est un groupe alkyle linéaire en $C_1$ à $C_{20}$ ou un groupe phénylalkyle de moins de 20 atomes de carbone.

**10.** Composés selon les revendications ci-dessus, qui sont :

le 2-décanesulfonylaminooctanol-1-phospho-2-benzyloxyéthanol,
le (R)-2-décanesulfonylaminooctanol-1-phospho-2-benzyloxyéthanol,
le (S)-2-décanesulfonylaminooctanol-1-phospho-2-benzyloxyéthanol,
le (R)-2-décanesulfonylaminohexanol-1-phospho-2-benzyloxyéthanol,
le (S)-2-décanesulfonylaminohexanol-1-phospho-2-benzyloxyéthanol,
le 2-dodécanoylaminooctanol-1-phospho-2-benzyloxyéthanol,
le 2-(3-phénylpropanesulfonylamino)octanol-1-phospho-2-benzyloxyéthanol,
le 2-décanesulfonylamino-4-phénylbutanol-1-phospho-2-benzyloxyéthanol,
le 2-décanesulfonylaminooctanol-1-phosphoéthanol,
le 2-dodécanoylaminooctanol-l-phosphoéthanol,
le 2-dodécanoylaminooctanol-1-phosphate,
le butylphosphonate de 2-décanesulfonaminooctyle,
le (4-phénylbutyl)phosphonate de 2-décanesulfonaminooctyle,
le butylphosphonate de 2-dodécanoylaminooctyle.

**11.** Procédé pour la préparation des composés selon la revendication 1, procédé dans lequel un composé de formule (II) de stéréochimie appropriée au carbone 2,

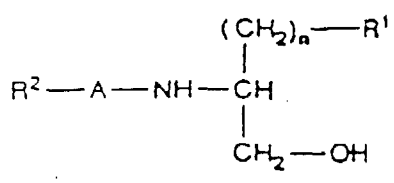

II

où $R^1$, n, A et $R^2$ ont les significations susmentionnées, est soumis à l'une des réactions suivantes :

a) Lorsque dans (I) B est un atome d'oxygène, le composé (II) est mis à réagir avec un groupe $PX_3$ réactif, où X est un halogène, en présence d'une base liant des protons et d'une base légèrement nucléophile, dans des solvants organiques appropriés, à une température de 0 à 40 °C pendant un temps de 3 à 18 heures, obtenant ainsi un composé de formule (III),

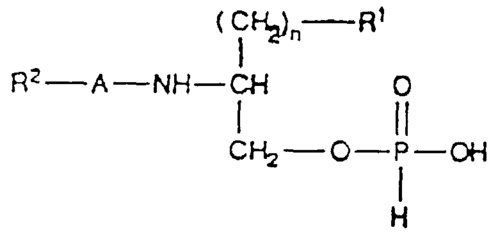

III

après quoi ce produit intermédiaire est mis à réagir avec un composé (IV),

$$HO\text{-}R^7 \qquad (IV)$$

où $R^7$ peut être équivalent au groupe $R^3$ dans la formule (I) sauf l'hydrogène ; dans un solvant organique, à une température de 0 à 25 °C pendant un temps de 1 à 6 heures, pour obtenir un produit intermédiaire de formule (V),

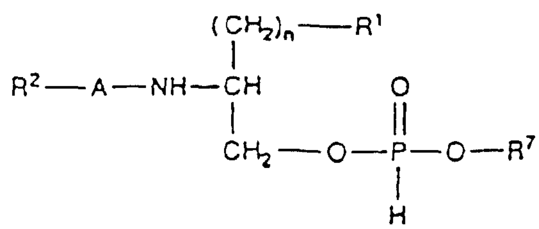

V

qui est oxydé dans un solvant approprié à une température de 0 à 25 °C pendant un temps de 1 à 5 heures, pour obtenir un produit intermédiaire (VI),

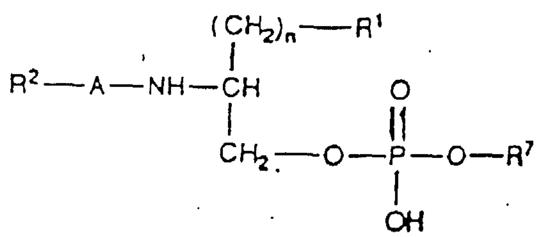

VI

où $R^1$, n, A, $R^2$ et $R^7$ ont les significations susmentionnées ; finalement, si nécessaire, le composé (VI) est converti en composé (I) en enlevant tous groupes protecteurs présents dans $R^7$ ;

b) Lorsque dans (I) B est de l'oxygène et $R^3$ est de l'hydrogène, le composé (II) est mis à réagir comme en a) pour donner le produit intermédiaire (III) qui est ensuite directement oxydé ;

c) lorsque dans (I) B est un groupe méthylène, le composé (II) est mis à réagir avec un composé (VII) réactif,

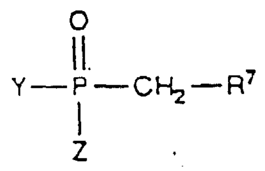

VII

où Y et Z sont un halogène ou un groupe méthoxy, en présence d'une amine, dans un solvant organique approprié, à une température de 0 à 40 °C pendant un temps de 3 à 24 heures, pour obtenir un produit intermédiaire de formule (VIII),

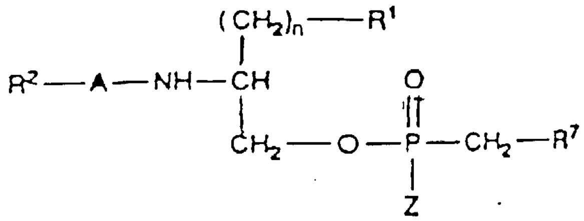

VIII

où $R^1$, n, A, $R^2$, Z et $R^7$ ont les significations susmentionnées ; le composé (VIII) est soumis à une hydrolyse acide dans un milieu aqueux lorsque Z est un halogène, ou à un traitement avec un agent nucléophile approprié lorsque Z est un groupe méthoxyde, pour obtenir un composé (IX),

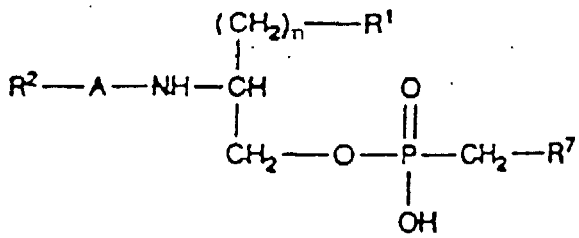

IX

où $R^1$, n, A, $R^2$ et $R^7$ ont les significations susmentionnées ; finalement, si nécessaire, le composé (IX) est converti en composé (I) en enlevant tous groupes protecteurs présents dans $R^7$.

12. Compositions pharmaceutiques contenant un composé selon les revendications 1 à 10 en tant qu'ingrédient actif, avec des excipients appropriés.

13. Utilisation des composés des revendications 1 à 10 pour la préparation d'un médicament pour le traitement de maladies inflammatoires et allergiques telles que la polyarthrite rhumatoïde, une tendinite, une bursite, le psoriasis, l'asthme bronchique.